# EUROPEAN PATENT APPLICATION

(11) **EP 4 617 034 A1**
(43) Date of publication of application: **17.09.2025**
(21) Application number: 23932124.3
(22) Date of filing: 16.08.2023
(51) Int. Cl.: B29C 43/34, B29C 70/54

(54) **MOLDING DEVICE AND MOLDING METHOD**

(30) Priority: 05.04.2023 JP 2023061365
(71) Applicant: Mitsubishi Heavy Industries, Ltd., Tokyo 100-8332 (JP)
(72) Inventor: MATSUOKA, Jun, Tokyo 100-8332 (JP); OKUMURA, Yukihiro, Tokyo 100-8332 (JP); KANI, Yuki, Tokyo 100-8332 (JP); NOMA, Kazuki, Tokyo 100-8332 (JP)
(74) Representative: Studio Torta S.p.A.
(86) International application number: PCT/JP2023/029627
(87) International publication number: WO 2024/209714

(57) **Abstract**

The purpose of the present invention is to suitably mold a workpiece into a desired shape. The molding device (10) molds a plate-like laminate (1), which is a composite material, such that, when the laminate is cut at a cross-section perpendicular to a Y- axis direction, the cross-section has a predetermined shape. The molding device (10) comprises: fixing parts (20, 30) that sandwich and fix a fixation target portion which is a portion of the laminate (1); and deformation parts (41, 42) that deform a deformation target portion which is a portion of the laminate (1). The fixing parts (20, 30) each have a curved section against which the deformation target portion is pressed. In each of the deformation parts (41, 42), a pressing surface which is pressed against the deformation target portion has a curved surface, and is pressed against the deformation target portion from a protruding direction of the curved section toward the curved section.

## Description

### Technical Field

The present disclosure relates to a molding device and a molding method.

### Background Art

As a component used in an aircraft, there is a long component (for example, a stringer) having a predetermined cross-sectional shape (for example, a Z shape or the like) and curved or bent along a longitudinal direction. Such a component may be manufactured by molding a flat plate-shaped laminate in which fiber-reinforced sheets, which are composite materials, are laminated. As a method for molding the laminate, a method of molding the laminate by a pressing device that presses the laminate is known (for example, PTL 1).

PTL 1 discloses a method of molding a laminate into a predetermined shape by pressing the laminate with a central module and a side module.

### Citation List

### Patent Literature

[PTL 1] U.S. Patent No. 9,533,481

### Summary of Invention

### Technical Problem

However, in the method of PTL 1, the central module comes into contact with the foldable portion of the laminate. For this reason, the side module cannot suppress the foldable portion, and the foldable portion is not sufficiently attached to the module. For this reason, in the foldable portion, the pressure on the laminate may be insufficient, and there is a possibility that the composite material cannot be molded into a desired shape.

In addition, it is also conceivable to mold the laminate into a desired shape by a vacuum bag method in which the laminate placed on the mold is covered with a bag and the inside of the bag is vacuumed. However, in the vacuum bag method, when the laminate is pressed against the recessed portion formed in the mold, there is a possibility that a pressure shortage against the laminate occur in the recessed portion. For this reason, there is a possibility that the composite material cannot be molded into a desired shape.

In addition, a method of disposing the laminate between the molds provided in the up-down direction and press-molding the laminate with both of the molds is also conceivable. However, in press molding, there is a possibility that a part of the laminate comes into contact with a mold earlier than other parts in the laminate without the entire laminate coming into contact with the mold at substantially the same time during the press process. In this way, in the laminate, a variation occurs in the timing of coming into contact with the mold, and thus there is a possibility that wrinkles occur in the laminate. When wrinkles occur, there is a possibility that the strength or rigidity of the component after molding is reduced.

The present disclosure has been made in view of such circumstances, and an object of the present disclosure is to provide a molding device and a molding method with which a workpiece can be suitably molded into a desired shape.

### Solution to Problem

In order to solve the above problems, a molding device and a molding method of the present disclosure adopt the following means.

A molding device according to an aspect of the present disclosure is a molding device that molds a plate-shaped workpiece, which is a composite material, such that a cross section, when the workpiece is cut at the cross section orthogonal to a longitudinal direction, has a predetermined shape, the molding device including: a fixing portion that fixes a fixed portion, which is a part of the workpiece, by sandwiching the fixed portion; and a deforming portion that deforms a deformed portion, which is a part of the workpiece and is a portion other than the fixed portion, in which the fixing portion has a curved portion to which the deformed portion is pressed, and the deforming portion has a pressing surface for pressing the deformed portion, the pressing surface having a curved surface, and presses the deformed portion from a protrusion direction of the curved portion toward the curved portion.

A molding method according to an aspect of the present disclosure is a molding method for molding a plate-shaped workpiece, which is a composite material in a state of being fixed to a fixing portion, by pressing the workpiece with a deforming portion, such that a cross section, when the workpiece is cut at the cross section orthogonal to a longitudinal direction, has a predetermined shape, the molding method including: a fixing step of fixing a fixed portion, which is a part of the workpiece, by sandwiching the fixed portion with the fixing portion; and a deforming step of deforming a deformed portion, which is a part of the workpiece and is a portion other than the fixed portion, in which in the deforming step, the deformed portion is deformed by pressing the deformed portion with a curved surface of the deforming portion from a protrusion direction of a curved portion of the fixing portion toward the curved portion.

### Advantageous Effects of Invention

According to the present disclosure, the workpiece can be suitably molded into a desired shape.

### Brief Description of Drawings

Fig. 1 is a perspective view of a molding device according to a first embodiment of the present disclosure.
Fig. 2 is a perspective view of a molding device according to the first embodiment of the present disclosure.
Fig. 3 is a perspective view of the molding device according to the first embodiment of the present disclosure.
Fig. 4 is a perspective view of the molding device according to the first embodiment of the present disclosure.
Fig. 5 is a perspective view of the molding device according to the first embodiment of the present disclosure.
Fig. 6 is a side view of the molding device according to the first embodiment of the present disclosure.
Fig. 7 is a side view of the molding device according to the first embodiment of the present disclosure.
Fig. 8 is a side view of a molding device according to a second embodiment of the present disclosure.
Fig. 9 is a side view of a molding device according to a third embodiment of the present disclosure.

### Description of Embodiments

Hereinafter, an embodiment of a molding device and a molding method according to the present disclosure will be described with reference to the drawings.

### [First Embodiment]

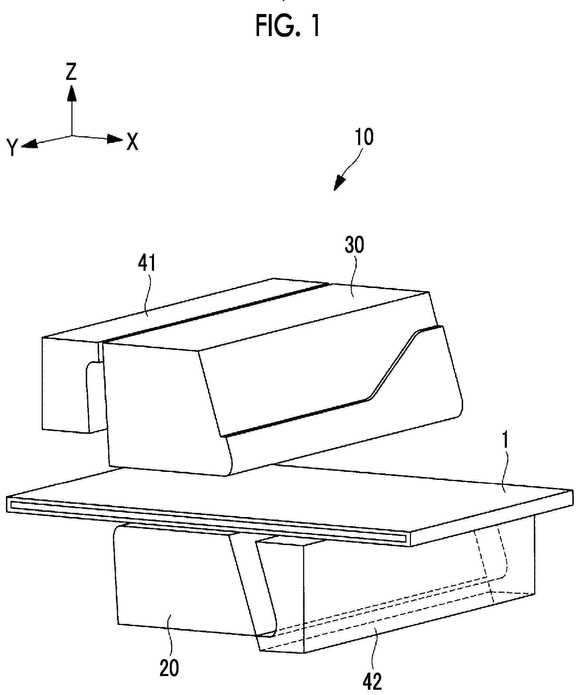

Hereinafter, the first embodiment of the present disclosure will be described with reference to Figs. 1 to 7. In the following description, the lateral direction of the laminate 1 and the composite structure 2 is referred to as an X-axis direction. In addition, a longitudinal direction of the laminate 1 and the composite structure 2 is referred to as a Y-axis direction. A direction orthogonal to the X-axis direction and the Y-axis direction is referred to as a Z-axis direction. In addition, in the following description, the Z-axis direction is the up-down direction, and thus, the Z-axis direction may be referred to as the up-down direction. In Figs. 1 to 3, for the sake of illustration, the laminate 1 is illustrated to be long in the X-axis direction. However, in reality, the longitudinal direction of the laminate 1 is the Y-axis direction.

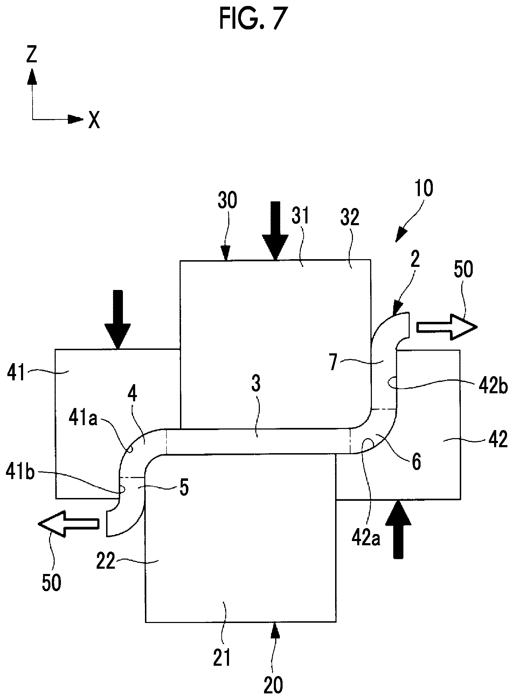

As shown in Fig. 1, the molding device according to the present embodiment is used when a composite structure 2 (see Fig. 7 and the like) is produced from a plate-shaped laminate (workpiece) 1 formed by laminating fiber sheets impregnated with a resin such as a prepreg. Specifically, the molding device is used when molding the laminate 1 into a predetermined shape. Examples of the composite structure 2 include a spar, a stringer or the like used for a fuselage, a main wing, or the like of an aircraft. The material for forming the laminate 1 is not limited to the above-described material. For example, a laminate may be formed using a fiber sheet (dry sheet) that includes only fibers and does not include a resin.

### [Composite Structure]

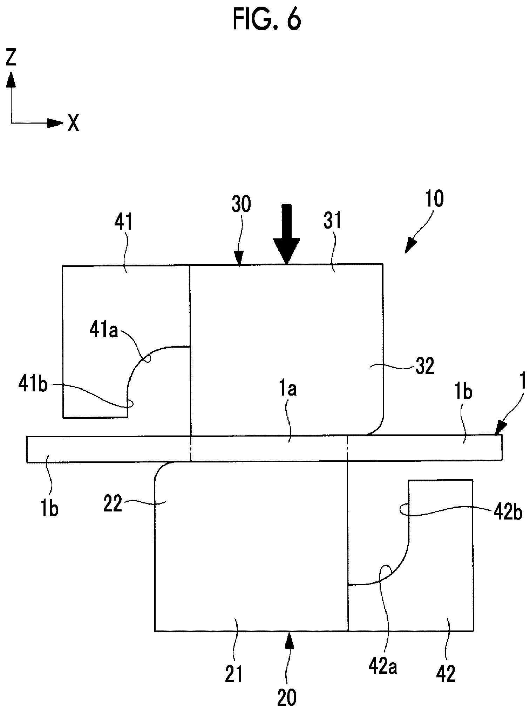

The composite structure 2 according to the present embodiment is a long member extending in the Y-axis direction. As shown in Figs. 6 and 7, the composite structure 2 has a Z-type shape in a cross section (cross section when cut along a plane orthogonal to the Y-axis direction) in the Y-axis direction (depth direction of the drawing in Figs. 6 and 7). The composite structure 2 has a shape in which a cross section in the Y-axis direction changes. The composite structure 2 extends linearly along the Y-axis direction. The length of the composite structure 2 in the Y-axis direction is, for example, 15 m or more and approximately 20 m or less. The length of the composite structure 2 is an example, and is not limited to this numerical value. For example, the length in the Y-axis direction may be shorter than 15 m or may be longer than 20 m.

The cross-sectional shape of the composite structure 2 in the Y-axis direction will be described.

As shown in Fig. 7, the composite structure 2 integrally has a web portion 3 extending in the X-axis direction, a first corner portion 4 that is bent downward from one end of the web portion 3 in the X-axis direction, a first flange portion 5 extending downward from a lower end of the first corner portion 4, a second corner portion 6 that is bent upward from the other end of the web portion 3 in the X-axis direction, and a second flange portion 7 extending upward from an upper end of the second corner portion 6.

The area of the surface (upper surface and lower surface) of the web portion 3 is larger than the area of the surface of the first flange portion 5 and the second flange portion 7.

### [Molding Device]

Next, the molding device 10 will be described. The molding device 10 molds the laminate 1, which is a composite material, such that a cross section in the Y-axis direction has a Z-type shape.

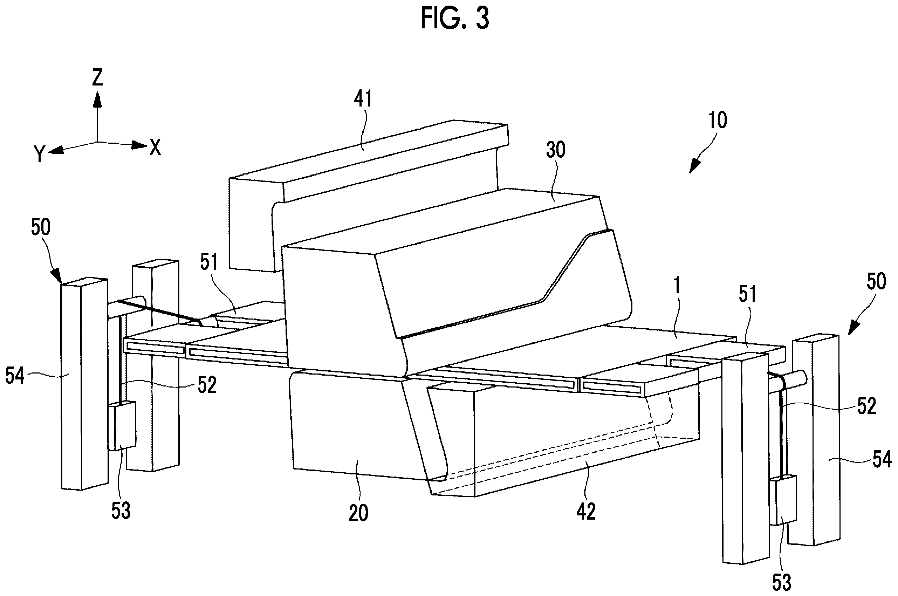

As shown in Fig. 1, the molding device 10 includes a lower center die (fixing portion) 20 on which the laminate 1 is placed, an upper center die (fixing portion) 30 that fixes a fixed portion 1a (refer to Fig. 6) which is a part of the laminate 1 placed on the lower center die 20, and a first side die (deforming portion) 41 and a second side die (deforming portion) 42 that deform a deformed portion 1b (refer to Fig. 6) which is a part of the laminate 1 and is a portion other than the fixed portion 1a. In addition, as shown in Fig. 3, the molding device 10 includes a pulling portion 50 that pulls the laminate 1 in the X-axis direction (intersecting direction).

As shown in Fig. 6, the central portion of the laminate 1 in the X-axis direction is the fixed portion 1a. In addition, both end portions of the laminate 1 in the X-axis direction are deformed portions 1b.

As shown in Figs. 1 and 6, the laminate 1 is placed on the upper surface of the lower center die 20. Specifically, as shown in Fig. 6, the fixed portion 1a, which is a part of the laminate 1, is placed.

The lower center die 20 integrally has a lower fixing portion 21 on which the fixed portion 1a of the laminate 1 is placed, and a lower curved portion (curved portion) 22 to which the deformed portion 1b is pressed from above. The lower fixing portion 21 and the lower curved portion 22 are disposed side by side in the X-axis direction.

The fixed portion 1a is placed on the upper surface of the lower fixing portion 21. The upper surface of the lower fixing portion 21 is a flat surface. The upper surface of the lower curved portion 22 is pressed by the deformed portion 1b pressed by the first side die 41. An upper surface of the lower curved portion 22 is a curved surface protruding upward. The upper surface of the lower fixing portion 21 and the upper surface of the lower curved portion 22 are continuously and smoothly connected. A side surface of the lower curved portion 22 is a flat surface.

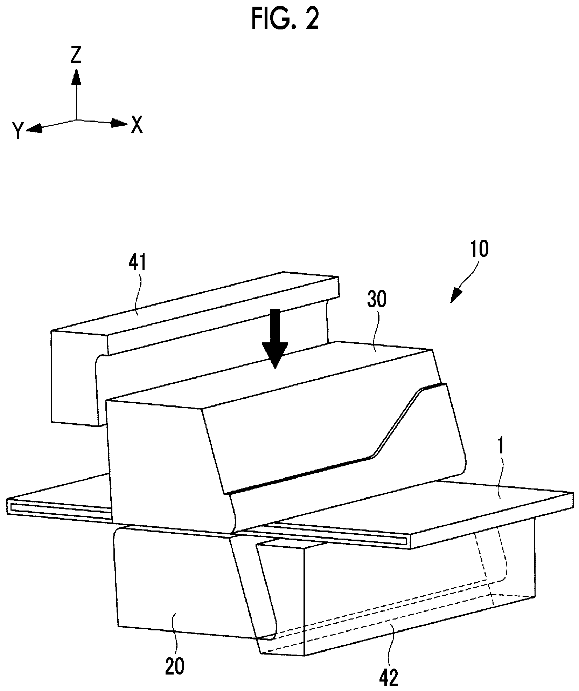

The upper center die 30 is provided above the lower center die 20. As indicated by arrows in Fig. 2, the upper center die 30 moves downward to sandwich the laminate 1 between the upper center die 30 and the lower center die 20. Specifically, as shown in Fig. 6, the fixed portion 1a of the laminate 1 is sandwiched. The lower center die 20 and the upper center die 30 are fixed by sandwiching the laminate 1.

The upper center die 30 integrally has an upper fixing portion 31 that is in surface contact with the fixed portion 1a of the laminate 1, and an upper curved portion (curved portion) 32 to which the deformed portion 1b is pressed from below. The upper fixing portion 31 and the upper curved portion 32 are disposed side by side in the X-axis direction.

The lower surface of the upper fixing portion 31 is in surface contact with the fixed portion 1a. The lower surface of the upper fixing portion 31 is a flat surface. The lower surface of the upper curved portion 32 is pressed by the deformed portion 1b pressed by the second side die 42. The lower surface of the upper curved portion 32 is a curved surface protruding downward. The lower surface of the upper fixing portion 31 and the lower surface of the upper curved portion 32 are continuously and smoothly connected. A side surface of the upper curved portion 32 is a flat surface.

The upper surface of the lower fixing portion 21 and the lower surface of the upper fixing portion 31 face each other. The lower fixing portion 21 and the upper fixing portion 31 fix the laminate 1 by sandwiching the laminate 1.

The lower curved portion 22 is provided on one end side (left side of the drawing in Fig. 6) in the X-axis direction with respect to the upper fixing portion 31. Specifically, the entire lower curved portion 22 is provided on one end side (left side of the drawing in Fig. 6) in the X-axis direction with respect to the upper fixing portion 31.

In addition, the upper curved portion 32 is provided on the other end side (right side of the drawing in Fig. 6) in the X-axis direction with respect to the lower fixing portion 21. Specifically, the entire upper curved portion 32 is provided on the other end side (right side of the drawing in Fig. 6) in the X-axis direction with respect to the lower fixing portion 21.

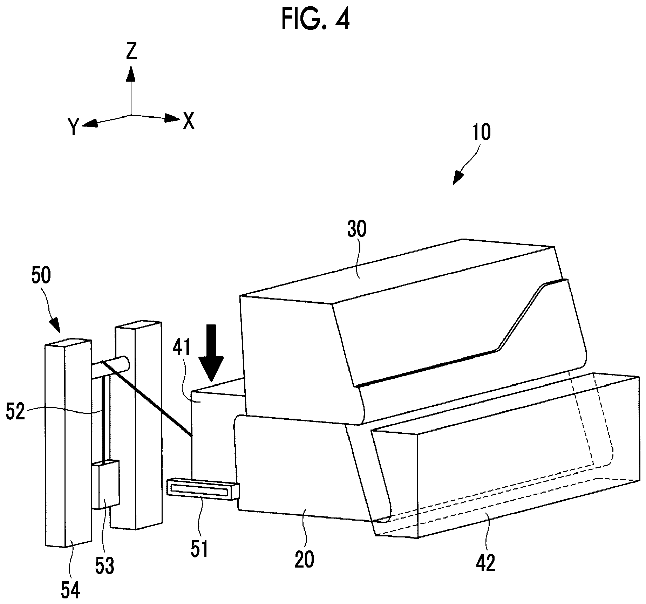

The first side die 41 is provided above the lower curved portion 22 of the lower center die 20. The first side die 41 is provided adjacent to the upper center die 30 in the X-axis direction. As shown by arrows in Figs. 4 and 7, the upper center die 30 moves downward to sandwich the laminate 1 between the upper center die 30 and the lower center die 20. Specifically, as shown in Figs. 6 and 7, the deformed portion 1b of the laminate 1 is sandwiched between the lower curved portion 22 of the lower center die 20 and the upper curved portion 32 of the upper center die 30. The first side die 41 and the lower curved portion 22 deform the laminate 1 by sandwiching the deformed portion 1b. The first corner portion 4 and the first flange portion 5 are molded by deforming the deformed portion 1b.

The lower surface of the first side die 41 has a pressing surface. The pressing surface has a curved surface 41a that molds the first corner portion 4 of the composite structure 2 by sandwiching the deformed portion 1b between the pressing surface and the upper surface of the lower curved portion 22. The curved surface 41a faces the upper surface of the lower curved portion 22. The curved surface 41a has a shape corresponding to the upper surface of the lower curved portion 22.

In addition, the pressing surface has a flange forming surface 41b that molds the first flange portion 5 of the composite structure 2 by sandwiching the deformed portion 1b between the pressing surface and the side surface of the lower curved portion 22. The flange forming surface 41b is a flat surface.

The second side die 42 is provided below the upper curved portion 32 of the upper center die 30. The second side die 42 is provided adjacent to the upper center die 30 in the X-axis direction. As shown by arrows in Figs. 4 and 7, the upper center die 30 moves upward to sandwich the laminate 1 between the upper center die 30 and the lower center die 20. Specifically, as shown in Figs. 6 and 7, the deformed portion 1b of the laminate 1 is sandwiched between the upper curved portion 32 of the upper center die 30 and the lower curved portion 22 of the lower center die 20. The second side die 42 and the upper curved portion 32 deform the laminate 1 by sandwiching the deformed portion 1b. The second corner portion 6 and the second flange portion 7 are molded by deforming the deformed portion 1b.

An upper surface of the second side die 42 has a pressing surface. The pressing surface has a curved surface 42a that molds the second corner portion 6 of the composite structure 2 by sandwiching the deformed portion 1b between the pressing surface and the lower surface of the upper curved portion 32. The curved surface 42a faces the upper surface of the upper curved portion 32. The curved surface 42a has a shape corresponding to the upper surface of the upper curved portion 32.

In addition, the pressing surface has a flange forming surface 42b that molds the second flange portion 7 of the composite structure 2 by sandwiching the deformed portion 1b between the pressing surface and the side surface of the upper curved portion 32. The flange forming surface 42b is a flat surface.

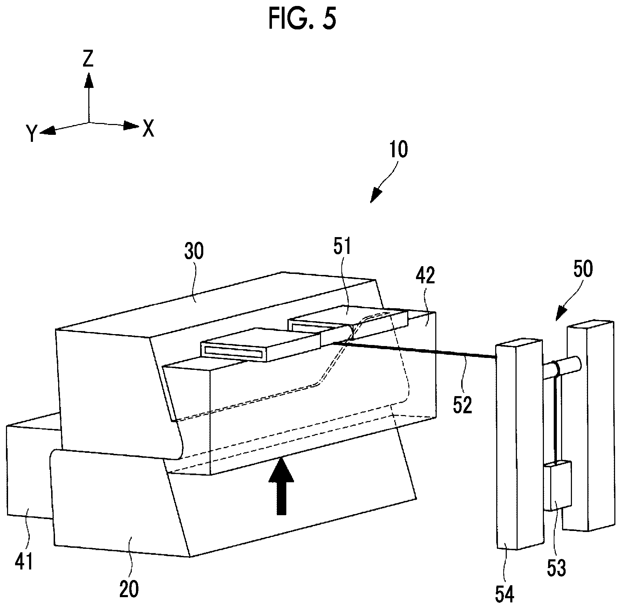

As shown in Figs. 3 to 5, the pulling portions 50 are provided on both sides of the laminate 1 in the X-axis direction. The pulling portion 50 includes an attachment portion 51 that is attached to an end surface of the laminate 1 in the X-axis direction, a wire 52 of which one end is fixed to the attachment portion 51, a weight 53 of which the other end is fixed to the wire 52, and a pillar portion 54 that is erected on the ground and suspends the weight 53. In Figs. 4 and 5, the laminate 1 is omitted in the drawings for the sake of clarity.

The pulling portion 50 applies a tensile force to the laminate 1 by pulling the laminate 1 in the X-axis direction.

### [Molding Method]

Next, a molding method of the laminate 1 using the molding device 10 according to the present embodiment will be described.

First, as shown in Fig. 1, the laminate 1 is placed on the lower fixing portion 21 of the lower center die 20. Next, as shown in Figs. 2 and 6, the upper center die 30 is moved downward. Then, the fixed portion 1a of the laminate 1 is sandwiched between the upper center die 30 and the lower center die 20 to fix the laminate 1. Next, as shown in Fig. 3, the pulling portion 50 is attached to the laminate 1. By attaching the pulling portion 50, the laminate 1 is in a state of being pulled in the X-axis direction.

Next, as shown in Figs. 4 and 7, the first side die 41 is moved downward. Then, the deformed portion 1b of the laminate 1 is pressed by the pressing surface (specifically, the curved surface 41a) of the first side die 41, and the deformed portion 1b is pressed against the upper surface of the lower curved portion 22. In this manner, the first corner portion 4 is molded. In addition, the deformed portion 1b is pressed against the side surface of the lower curved portion 22 by the pressing surface (specifically, the flange forming surface 41b) of the first side die 41. In this manner, the first flange portion 5 is molded. An end portion of the deformed portion 1b on the fixed portion 1a side is a part of the web portion 3 without being deformed.

Next, as shown in Figs. 5 and 7, the second side die 42 is moved upward. Then, the deformed portion 1b of the laminate 1 is pressed by the pressing surface (specifically, the curved surface 42a) of the second side die 42, and the deformed portion 1b is pressed against the lower surface of the upper curved portion 32. In this manner, the second corner portion 6 is molded. In addition, the deformed portion 1b is pressed against the side surface of the upper curved portion 32 on the pressing surface (specifically, the flange forming surface 42b) of the second side die 42. In this manner, the second flange portion 7 is molded. An end portion of the deformed portion 1b on the fixed portion 1a side is a part of the web portion 3 without being deformed.

In the above description, the first side die 41 is moved and then the second side die 42 is moved. However, the first side die 41 may be moved after the second side die 42 is moved. In addition, the first side die 41 and the second side die 42 may be moved at the same time.

In this way, the first corner portion 4, the first flange portion 5, the second corner portion 6, and the second flange portion 7 are formed. The portion that is not deformed by the molding device 10 is the web portion 3.

Next, the laminate 1 after the molding (that is, the composite structure 2 molded into a desired shape) is taken out from the molding device 10. In this way, the laminate 1 is molded into a desired shape.

According to the present embodiment, the following actions and effects are obtained.

In the present embodiment, the lower center die 20 and the upper center die 30 fix only the fixed portion 1a of the laminate 1. That is, the lower center die 20 and the upper center die 30 do not fix the deformed portion 1b. In addition, the first side die 41 and the second side die 42 that move independently of the lower center die 20 and the upper center die 30 press the deformed portion 1b to deform the laminate 1. In this manner, the first side die 41 and the second side die 42 are suitably brought into contact with the deformed portion 1b. Therefore, the pressure can be suitably applied to the deformed portion 1b. Therefore, the laminate 1 can be suitably molded into a desired shape.

In addition, in the present embodiment, the first side die 41 and the second side die 42 press the deformed portion 1b from the protrusion direction (that is, the convex side) of the lower curved portion 22 and the upper curved portion 32 toward the lower curved portion 22 and the upper curved portion 32. In this manner, compared to a case where the deformed portion 1b is pressed from a side (that is, a concave side) opposite to the protrusion direction of the lower curved portion 22 and the upper curved portion 32, a pressure can be applied to the deformed portion 1b. Therefore, the laminate 1 can be suitably molded into a desired shape.

In addition, in the present embodiment, the pulling portion 50 is provided that pulls the laminate 1 in a direction (X-axis direction, hereinafter also referred to as "intersecting direction") intersecting the direction in which the laminate 1 is pressed (Z-axis direction, hereinafter also referred to as "pressing direction"). In this manner, the laminate 1 can be pressed in the pressing direction by the first side die 41 and the second side die 42 in a state where the tensile force is applied to the laminate 1 in the intersecting direction. Therefore, the laminate 1 can be deformed to be scraped. Therefore, since the wrinkles occurred in the laminate 1 are extended to the end portions of the laminate 1 in the intersecting direction, the wrinkles are less likely to remain in the laminate 1. Therefore, it is possible to reduce wrinkles occurred in the laminate 1. Therefore, the strength and rigidity of the component (composite structure 2) after the molding can be improved.

In addition, in the present embodiment, the web portion 3, which is the widest surface of the composite structure 2, is fixed to the lower center die 20 and the upper center die 30. In this manner, it is possible to make it difficult for wrinkles to occur when the deformed portion 1b is deformed to mold the first corner portion 4, the first flange portion 5, the second corner portion 6, and the second flange portion 7. Therefore, the strength and rigidity of the component (composite structure 2) after the molding can be improved.

### [Second Embodiment]

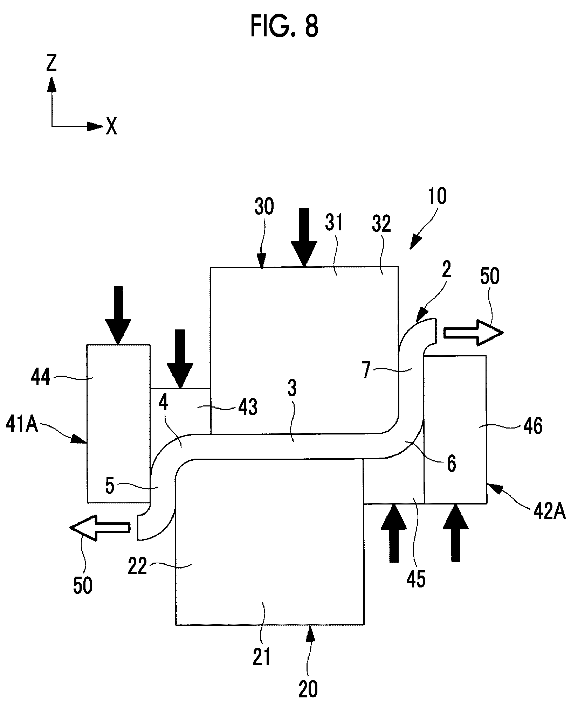

Next, a second embodiment of the present disclosure will be described using Fig. 8. The present embodiment is different from the first embodiment in that the corner portion forming die and the flange portion forming die in which the first side die and the second side die are independently moved are provided. Since other points are the same as those in the first embodiment, the same points are denoted by the same reference numerals, and detailed description thereof will be omitted.

As shown in Fig. 8, the first side die 41A has a corner portion forming die (first pressing portion) 43 that forms the first corner portion 4 and a flange portion forming die (second pressing portion) 44 that forms the first flange portion 5. The corner portion forming die 43 and the flange portion forming die 44 are provided adjacent to each other in the X-axis direction. The flange portion forming die 44 is provided on the end portion side in the X-axis direction with respect to the corner portion forming die 43.

The lower surface of the corner portion forming die 43 has a shape corresponding to the upper surface of the lower curved portion 22. That is, the lower surface of the corner portion forming die 43 is curved. The lower surface of the corner portion forming die 43 molds the first corner portion 4 of the composite structure 2 by sandwiching the deformed portion 1b between the lower surface of the corner portion forming die 43 and the upper surface of the lower curved portion 22. The lower surface of the corner portion forming die 43 faces the upper surface of the lower curved portion 22.

In addition, the flange portion forming die 44 molds the first flange portion 5 of the composite structure 2 by sandwiching the deformed portion 1b between the flange portion forming die 44 and the side surface of the lower curved portion 22.

The second side die 42A has a corner portion forming die (first pressing portion) 45 that forms the second corner portion 6 and a flange portion forming die (second pressing portion) 46 that forms the second flange portion 7. The corner portion forming die 45 and the flange portion forming die 46 are provided adjacent to each other in the X-axis direction. The flange portion forming die 46 is provided on the end portion side in the X-axis direction with respect to the corner portion forming die 45.

The upper surface of the corner portion forming die 45 has a shape corresponding to the lower surface of the upper curved portion 32. That is, the upper surface of the corner portion forming die 45 is curved. The upper surface of the corner portion forming die 45 molds the second corner portion 6 of the composite structure 2 by sandwiching the deformed portion 1b between the lower surface of the upper curved portion 32 and the upper surface of the corner portion forming die 45. The upper surface of the corner portion forming die 45 faces the lower surface of the upper curved portion 32.

In addition, the flange portion forming die 46 molds the second flange portion 7 of the composite structure 2 by sandwiching the deformed portion 1b between the flange portion forming die 46 and the side surface of the upper curved portion 32.

Next, a molding method of the laminate 1 using the molding device 10 according to the present embodiment will be described.

Since the steps up to the step of fixing the laminate 1 are the same as those in the first embodiment, the description thereof will be omitted.

In the present embodiment, when the first side die 41A is moved downward, first, the corner portion forming die 43 is moved downward. In this way, the first corner portion 4 is molded. Next, the first flange portion 5 is molded by moving the flange portion forming die 44 downward.

Similarly, when the second side die 42A is moved upward, first, the corner portion forming die 45 is moved upward. In this way, the second corner portion 6 is molded. Next, the flange portion forming die 46 is moved upward to mold the second flange portion 7.

In this way, in the present embodiment, the web portion, the corner portion, and the flange portion are pressurized in this order.

According to the present embodiment, the following actions and effects are achieved.

In the present embodiment, the first side die 41A includes a corner portion forming die 43 that presses the deformed portion 1b and a flange portion forming die 44. In addition, the corner portion forming die 43 presses the deformed portion 1b before the flange portion forming die 44 presses the laminate 1. Accordingly, when the laminate 1 is pressed, the corner portion forming die 43 presses and deforms the deformed portion 1b, and then the flange portion forming die 44 presses the other portion. That is, the laminate 1 is deformed in order from the central side toward the end portion side in the X-axis direction. Therefore, the laminate 1 can be deformed to be scraped. Therefore, since the wrinkles occurred in the laminate 1 are extended to the end portions of the laminate 1 in the X-axis direction, the wrinkles are unlikely to remain in the laminate 1. Therefore, it is possible to reduce wrinkles occurred in the laminate 1. Therefore, the strength and rigidity of the component after the molding can be improved.

### [Third Embodiment]

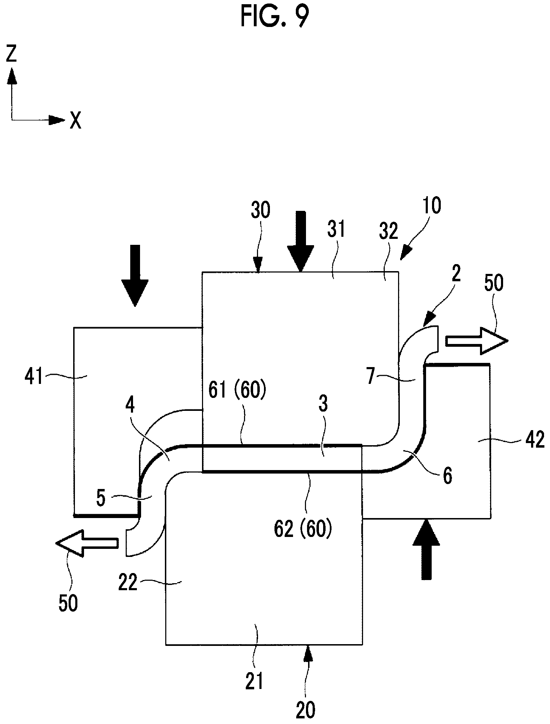

Next, a third embodiment of the present disclosure will be described with reference to Fig. 9. The present embodiment is different from the first embodiment in that the elastic body is provided between the laminate 1 and the molding device 10. Since other points are the same as those in the first embodiment, the same points are denoted by the same reference numerals, and detailed description thereof will be omitted.

The molding device 10 according to the present embodiment is provided between the laminate 1 and the molding device 10, and includes an elastic material 60 having elasticity. The elastic material 60 has elasticity. The elastic material 60 has a sheet shape. The elastic material 60 is formed of, for example, a rubber material.

Two elastic materials 60 are provided.

The two elastic materials 60 include an upper elastic material 61 provided between the upper center die 30 and the first side die 41 and the upper surface of the laminate 1, and a lower elastic material 62 provided between the lower center die 20 and the second side die 42 and the lower surface of the laminate 1.

The other end portion (right side of the drawing) of the upper elastic material 61 in the X-axis direction is fixed to the upper center die 30. In addition, one end portion (left side of the drawing) in the X-axis direction is fixed to the first side die 41.

One end portion of the lower elastic material 62 in the X-axis direction is fixed to the lower center die 20. In addition, the other end portion in the X-axis direction is fixed to the second side die 42.

Next, a molding method of the laminate 1 using the molding device 10 according to the present embodiment will be described.

Since the steps up to the step of fixing the laminate 1 are the same as those in the first embodiment, the description thereof will be omitted.

In the present embodiment, when the first side die 41 is moved downward, the upper elastic material 61 presses the laminate 1 against the lower curved portion 22 before the first side die 41 comes into contact with the laminate 1. Similarly, when the second side die 42 is moved upward, the lower elastic material 62 presses the laminate 1 against the upper curved portion 32 before the second side die 42 comes into contact with the laminate 1.

In this way, in the present embodiment, the web portion, the corner portion, and the flange portion can be pressurized in this order.

According to the present embodiment, the following actions and effects are achieved.

In the present embodiment, when the first side die 41 or the second side die 42 presses the laminate 1, the upper elastic material 61 or the lower elastic material 62 presses the laminate 1. Accordingly, when the laminate 1 is pressed, the laminate 1 can be deformed in order from the central side toward the end portion side in the X-axis direction. Therefore, the laminate 1 can be deformed to be scraped. Therefore, since the wrinkles occurred in the laminate 1 are extended to the end portions of the laminate 1 in the X-axis direction, the wrinkles are unlikely to remain in the laminate 1. Therefore, it is possible to reduce wrinkles occurred in the laminate 1. Therefore, the strength and rigidity of the component after the molding can be improved.

The present disclosure is not limited to each of the above-described embodiments, and can be appropriately modified within a scope that does not depart from the gist of the present disclosure.

For example, in each of the above-described embodiments, an example in which the aircraft component is molded by the molding device 10 has been described. However, the present disclosure is not limited thereto. The molding device 10 may mold a component of an automobile or a wind power generation device.

In addition, in the respective embodiments, an example in which the cross-sectional shape of the composite structure 2 in the longitudinal direction is a Z-type shape has been described, but the present disclosure is not limited thereto. For example, the cross-sectional shape of the composite structure 2 may be a C-type shape or a hat-type shape.

In addition, in each of the above-described embodiments, an example in which the composite structure 2 linearly extends along the longitudinal direction has been described. However, the composite structure 2 may be entirely curved along the longitudinal direction.

In addition, in each of the above-described embodiments, an example in which the molding device 10 includes the pulling portion 50 has been described. However, the present disclosure is not limited thereto. For example, the pulling portion 50 may be omitted. In addition, in the above-described embodiment, an example has been described in which the pulling portion 50 applies a tensile force to the laminate 1 by the weight 53. However, the present disclosure is not limited thereto. For example, the pulling portion may apply a tensile force to the laminate 1 by pulling the laminate 1 with an actuator or the like.

The molding device and the molding method described in the above-described embodiment are understood as follows, for example.

A molding device according to a first aspect of the present disclosure is a molding device (10) that molds a plate-shaped workpiece (1), which is a composite material, such that a cross section, when the workpiece is cut at the cross section orthogonal to a longitudinal direction (Y-axis direction), has a predetermined shape, the molding device including: a fixing portion (20, 30) that fixes a fixed portion (1a), which is a part of the workpiece, by sandwiching the fixed portion; and a deforming portion (41, 42) that deforms a deformed portion (1b), which is a part of the workpiece and is a portion other than the fixed portion, in which the fixing portion has a curved portion (22, 32) to which the deformed portion is pressed, and the deforming portion has a pressing surface for pressing the deformed portion, the pressing surface having a curved surface (41a), and presses the deformed portion from a protrusion direction of the curved portion toward the curved portion.

In the above configuration, the fixing portion fixes the fixed portion of the workpiece. That is, the fixing portion does not fix the deformed portion. In addition, the deformed portion is deformed by a deforming portion different from the fixing portion pressing the workpiece. Accordingly, the deforming portion is suitably brought into contact with the deformed portion. Therefore, the pressure can be suitably applied to the deformed portion. Therefore, the workpiece can be suitably molded into a desired shape.

In addition, in the above-described configuration, the deforming portion presses the deformed portion from the protrusion direction (that is, the convex side) of the curved portion toward the curved portion. In this manner, compared to a case where the deformed portion is pressed from a side opposite to the protrusion direction of the curved portion (that is, a concave side), a pressure can be applied to the deformed portion. Therefore, the workpiece can be molded into a desired shape.

In addition, in the molding device according to a second aspect of the present disclosure, there is provided the molding device according to the first aspect, the molding device further including: a pulling portion (50) that pulls the workpiece in a direction intersecting a direction in which the workpiece is pressed.

In the above configuration, the pulling portion is provided that pulls the workpiece in the direction (hereinafter, referred to as "intersecting direction") intersecting the direction in which the workpiece is pressed (hereinafter, referred to as "pressing direction"). In this manner, the workpiece can be pressed in the pressing direction by the deforming portion in a state where the tensile force is applied to the workpiece in the intersecting direction. Therefore, the workpiece can be deformed to be scraped. Therefore, since the wrinkles occurred in the workpiece are extended to the end portions of the workpiece in the intersecting direction, the wrinkles are less likely to remain in the workpiece. Therefore, it is possible to reduce wrinkles occurred in the workpiece. Therefore, the strength and rigidity of the component after the molding can be improved.

In addition, according to a third aspect of the present disclosure, there is provided the molding device according to the first aspect or the second aspect, the molding device further including: an elastic material (60) that is provided between the deformed portion and the deforming portion and has elasticity, in which one end portion of the elastic material is fixed to the fixing portion, and the other end portion of the elastic material is fixed to the deforming portion with the deformed portion interposed therebetween.

The above configuration includes the elastic material that is provided between the deformed portion and the deforming portion and that has elasticity. In addition, the elastic material has one end portion fixed to the fixing portion and the other end portion fixed to the deforming portion. Accordingly, when the deforming portion presses the deformed portion, the elastic material comes into contact with the deformed portion and is deformed according to the shape of the deformed portion. Therefore, for example, even in a case where a part of the deforming portion (for example, a portion to which the other end portion of the elastic material is fixed) comes into contact with the other portion of the laminate before the deformed portion, the elastic material presses the deformed portion. In this manner, the workpiece can be deformed to be scraped. Therefore, it is possible to reduce wrinkles occurred in the workpiece. Therefore, the strength and rigidity of the component after the molding can be improved.

In addition, in the molding device according to a fourth aspect of the present disclosure, in any one of the first to third aspects, the deforming portion includes a first pressing portion (43, 45) that presses the deformed portion, and a second pressing portion (44, 46) that is provided adjacent to the first pressing portion in a direction intersecting a direction in which the workpiece is pressed and presses the workpiece, and the first pressing portion presses the deformed portion before the second pressing portion presses the workpiece.

In the above configuration, the deforming portion includes the first pressing portion that presses the deformed portion and the second pressing portion that is provided adjacent to the first pressing portion in the intersecting direction and presses the workpiece. In addition, the first pressing unit presses the deformed portion before the second pressing unit presses the workpiece. Accordingly, when the laminate is pressed, the first pressing portion presses and deforms the deformed portion, and then the second pressing portion presses the other portion. Therefore, the workpiece can be deformed to be scraped. Therefore, since the wrinkles occurred in the workpiece are extended to the end portions of the workpiece in the intersecting direction, the wrinkles are less likely to remain in the workpiece. Therefore, it is possible to reduce wrinkles occurred in the workpiece. Therefore, the strength and rigidity of the component after the molding can be improved.

A molding method according to a fifth aspect of the present disclosure is a molding method for molding a plate-shaped workpiece (1), which is a composite material in a state of being fixed to a fixing portion (20, 30), by pressing the workpiece with a deforming portion (41, 42), such that a cross section, when the workpiece is cut at the cross section orthogonal to a longitudinal direction, has a predetermined shape, the molding method including: a fixing step of fixing a fixed portion (1a), which is a part of the workpiece, by sandwiching the fixed portion with the fixing portion; and a deforming step of deforming a deformed portion (1b), which is a part of the workpiece and is a portion other than the fixed portion, in which in the deforming step, the deformed portion is deformed by pressing the deformed portion with a curved surface (41a) of the deforming portion from a protrusion direction of a curved portion (22, 32) of the fixing portion toward the curved portion.

### Reference Signs List

1: laminate (workpiece)
1a: fixed portion
1b: deformed portion
2: composite structure
3: web portion
4: first corner portion
5: first flange portion
6: second corner portion
7: second flange portion
10: molding device
20: lower center die (fixing portion)
21: lower fixing portion
22: lower curved portion
30: upper center die (fixing portion)
31: upper fixing portion
32: upper curved portion
41: first side die (deforming portion)
41A: first side die (deforming portion)
41a: curved surface
41b: flange forming surface
42: second side die
42A: second side die
42a: curved surface
42b: flange forming surface
43: corner portion forming die
44: flange portion forming die
45: corner portion forming die
46: flange portion forming die
50: pulling portion
51: attachment portion
52: wire
53: weight
54: pillar portion
60: elastic material
61: upper elastic material
62: lower elastic material

## Claims

1. A molding device that molds a plate-shaped workpiece, which is a composite material, such that a cross section, when the workpiece is cut at the cross section orthogonal to a longitudinal direction, has a predetermined shape, the molding device comprising:
a fixing portion that fixes a fixed portion, which is a part of the workpiece, by sandwiching the fixed portion; and
a deforming portion that deforms a deformed portion, which is a part of the workpiece and is a portion other than the fixed portion,
wherein the fixing portion has a curved portion to which the deformed portion is pressed, and
the deforming portion has a pressing surface for pressing the deformed portion, the pressing surface having a curved surface, and presses the deformed portion from a protrusion direction of the curved portion toward the curved portion.

2. The molding device according to claim 1, further comprising:
a pulling portion that pulls the workpiece in a direction intersecting a direction in which the workpiece is pressed.

3. The molding device according to claim 1, further comprising:
an elastic material that is provided between the deformed portion and the deforming portion and has elasticity,
wherein one end portion of the elastic material is fixed to the fixing portion, and the other end portion of the elastic material is fixed to the deforming portion with the deformed portion interposed therebetween.

4. The molding device according to claim 1,
wherein the deforming portion includes a first pressing portion that presses the deformed portion, and a second pressing portion that is provided adjacent to the first pressing portion in a direction intersecting a direction in which the workpiece is pressed and presses the workpiece, and
the first pressing portion presses the deformed portion before the second pressing portion presses the workpiece.

5. A molding method for molding a plate-shaped workpiece, which is a composite material in a state of being fixed to a fixing portion, by pressing the workpiece with a deforming portion, such that a cross section, when the workpiece is cut at the cross section orthogonal to a longitudinal direction, has a predetermined shape, the molding method comprising:
a fixing step of fixing a fixed portion, which is a part of the workpiece, by sandwiching the fixed portion with the fixing portion; and
a deforming step of deforming a deformed portion, which is a part of the workpiece and is a portion other than the fixed portion,
wherein in the deforming step, the deformed portion is deformed by pressing the deformed portion with a curved surface of the deforming portion from a protrusion direction of a curved portion of the fixing portion toward the curved portion.
